# EUROPÄISCHE PATENTSCHRIFT

(11) **EP 0 837 087 B1**
(45) Veröffentlichungstag und Bekanntmachung des Hinweises auf die Patenterteilung: **20.03.2002**
(21) Anmeldenummer: 97116608.7
(22) Anmeldetag: 24.09.1997
(51) Int. Cl.: C08G 69/26, G02B 1/04, C08L 77/00

(54) **Verwendung von Polyamid-Formmassen zur Herstellung von optischen oder elektrooptischen Formteilen**
Use of polyamide mouldings for the manufacture of optical or electro-optical moulded articles
Utilisation de masses à mouler en polyamide pour la fabrication d'objets moulés optiques ou électro-optiques

(30) Priorität: 17.10.1996 DE 19642885
(43) Veröffentlichungstag der Anmeldung: 22.04.1998
(73) Patentinhaber: EMS-INVENTA AG, 8002 Zürich (CH)
(72) Erfinder: Dalla Torre, Hans, Dr., 7013 Domat / Ems (CH); Hala, Ralf, Dipl.-Ing., 88161 Lindenberg (DE)
(74) Vertreter: Pfenning, Meinig & Partner

(56) Entgegenhaltungen:
- EP-A- 0 725 101
- GB-A- 2 140 582

## Beschreibung

Die Erfindung betrifft die Verwendung von Polyamid-Formmassen, deren Legierungen oder Blends, die mindestens ein Homopolyamid aufweisen, für optische oder elektrooptische Zwecke.

Transparente Kunststoffe als Mineralglasersatz usw., aber auch als Ersatz weiterer Werkstoffe werden bei mehr und mehr Anwendungen eingesetzt. Gründe dafür sind die große Gewichtsersparnis, die einfache Reinigung, die leichte Wiederverwendbarkeit, das stark verbesserte Recycling, die vielseitigere, raschere, gefahrlosere Anwendbarkeit, die mannigfaltige Ausstattungsfähigkeit mit speziellen Eigenschaften, der modische Effekt, die ökonomische Entsorgung und zunehmend konkurrenzfähigere Preise.

Zu den zum Teil altbekannten transparenten Kunststoffen wie PMMA, PS, ABS, PVC, Cellulosebutyrat, Celluloseacetat, CR 39 sind weitere bekannte hinzugekommen wie PC, SAN, SB, CAP, PET, PBT, PSU, PVF, PU, APET, COC und amorphe Polyolefine. Neben diesen haben sich auch transparente Polyamide etabliert und sind als Funktionsteile in der Automobil-, Elektroindustrie, Feinwerktechnik, Medizintechnik und der modischen Branche anzutreffen.

Transparente Polyamide sind neben PC, PMMA u.a. beliebte Werkstoffe für Brillengestelle und Brillengläser, sie sind aber nicht im eigentlichen optischen Bereich wie Linsen, Lupen, Sonnenbrillen usw. eingesetzt worden wegen mangelnder Transparenz, Reinheit, Zähigkeit, Lösungsmittelbeständigkeit, Kratzfestigkeit (Ritzhärte) und Dimensionsstabilität. Nachteilig bei diesen vorbekannten transparenten Polyamiden ist vor allem, daß diese nicht gleichzeitig über eine niedere Dichte, einen hohen Brechungsindex und eine hohe Abbé-Zahl verfügen. Diese Kenngrößen sind jedoch insbesondere für optische Anwendungen von Polyamiden äußerst wichtig, da z.B. Linsen nicht nur einen hohen Brechungsindex und eine hohe Abbé-Zahl, sondern gleichzeitig auch noch eine relativ niedere Dichte aufweisen sollten. Nur dadurch ist es möglich, funktionsfähige Linsen herzustellen, die auch die entsprechende Weichheit besitzen. Neben diesen Anforderungen ist es aber für die meisten optischen und elektrooptischen Anwendungen erforderlich, daß die hier in Frage kommenden Werkstoffe wärmebeständig, lösungsmittel- und kratzfest sind. Gleichzeitig wird bei diesen Anwendungen gefordert, daß die Werkstoffe eine große Wechselbiegefestigkeit und eine hohe Zähigkeit aufweisen.

Ausgehend hiervon, ist es die Aufgabe der vorliegenden Erfindung, Polyamide vorzuschlagen, die für optische Anwendungen eingesetzt werden können, bei denen zum einen ein hoher Brechungsindex und eine hohe Abbé-Zahl und gleichzeitig eine relativ niedere Dichte vorliegt. Diese Polyamide sollen zusätzlich eine hohe Wechselbiegefestigkeit, Chemikalienbeständigkeit und Wärmeformbeständigkeit aufweisen.

Die Aufgabe wird durch die kennzeichnenden Merkmale des Anspruches 1 gelöst. Die Unteransprüche zeigen vorteilhafte Weiterbildungen auf.

Die Anmelderin konnte überraschenderweise zeigen, daß die an und für sich aus der EP 0 725 101 A1 bekannten transparenten Polyamide alle gestellten Anforderungen erfüllen. Die transparenten Polyamide nach der EP 0 725 101 A1 werden deshalb erfindungsgemäß zur Herstellung von Formkörpern für optische oder elektrooptische Anwendungen eingesetzt. Die transparenten Polyamide sind besonders geeignet für Linsen, Brillengläser oder Lupen und für optische Fasern bzw. Kabelschutzrohre für Lichtwellenleiter. Es hat sich gezeigt, daß die transparenten Polyamide auch zur Herstellung von farblosen oder gefärbten optischen Halbzeugen oder Brillengläsern oder Linsen oder Brillengestellen sowie deren Kombination eingesetzt werden können.

Das Polyamid findet auch Verwendung bei der Herstellung von Schutzmasken, Visieren, als Sicht- und Abdeckteil in Instrumenten wie Uhren-, Spiegel-, Beleuchtungsgläsern in Filtertassen, als Schutz- und Sichtfenster in Vehikeln, in Sport- und Freizeitgerätschaften, als Funktionsteile im Bereich Medizin, Telekommunikation, Toiletrie, Haushalt, Automobil und Verkehr.

Die mit den transparenten Polyamiden hergestellten optischen und elektrooptischen Formkörper zeichnen sich besonders aus durch eine exzellente Oberflächenqualität, durch eine glasklare, brillante und verzerrungsfreie Transparenz mit einer Lichttransmission von über 90 % für Schichtdicken ≥ 5 mm, durch Wechselbiegefestigkeiten an Testkörpern gemäß DIN 53442 von mehr als 2 Millionen Zyklen, durch eine hohe Kerbschlagzähigkeit von mehr als 12 KJ/m², durch eine niedrige Dichte von ≤ 1,1 g/cm³, durch einen hohen Brechungsindex n_{D}²⁰ von 1,50, durch eine hohe Wärmeformbeständigkeit entsprechend einem Glaspunkt von 157 °C, einer ausgezeichneten Beständigkeit gegen Chemikalien und Lösungsmittel (wie Alkohole, Ketone, Ester, aromatische und halogenierte KW), einer ausgezeichneten Ritzhärte (Clemens) und einer niedrigen Wasseraufnahme < 1,5 %.

Die Formkörper besitzen außerdem eine gute Witterungsbeständigkeit, sei es bezüglich ihrer Oberfläche, Transparenz, ihrer Helligkeit oder sei es bezüglich der mechanischen Eigenschaften wie Schlagzugzähigkeit und Reißdehnung; sie sind gut beschichtbar, gut einfärbbar, kratz- und abriebfest.

Die Formkörper können einfach verarbeitet werden bei mittleren Temperaturen von 250 °C bis 280 °C mittels Spritzguß, Spritzblasen, Tiefziehen, Extrusion und ähnlichen Verarbeitungsprozessen zu Form- und Hohlkörpern.

Die mit den transparenten Polyamiden hergestellten optischen oder elektrooptischen Formkörper zeichnen sich somit durch eine ausgezeichnete Transparenz und gute Oberfläche, durch ein niederes spezifisches Gewicht, hohe Zähigkeit und Wechselbiegefestigkeit, ausgezeichnete Lösungsmittel- und Hitzebeständigkeit, gepaart mit einer ausgezeichneten Abriebhärte, Kratzfestigkeit, Steifheit und Maßstabilität, gute Beschichtbarkeit und gute optische Kennwerte (n_{D}²⁰, Abbé-Zahl) aus.

Auch in Kenntnis der vorbekannten EP 0 725 101 A1 war es für den Fachmann nicht zu erwarten, daß diese Polyamide alle diese geforderten Eigenschaften in Kombination aufweisen, dies um so mehr, als bisher für optische Anwendung, insbesondere Linsen und Brillengläser, die verschiedenartigsten Kunststoffe eingesetzt wurden, jedoch kein amorphes Polyamid. Es ist deshalb überraschend, daß gerade die ausgewählte Klasse an Polyamiden alle diese Eigenschaften in Kombination erfüllt.

Aus stofflicher Sicht betrifft die Erfindung die Verwendung aller in der EP 0 725 101 A1 beschriebenen Polyamide. Auf den Offenbarungsgehalt dieses Dokumentes wird deshalb ausdrücklich Bezug genommmen.

Besonders geeignet für die erfindungsgemäße Verwendung sind jedoch diejenigen Homopolyamide, bei denen als cycloaliphatisches Diamin Bis(amino)-cycloalkane, insbesondere Bis(3-methyl-4-amino-cyclohexyl)-methan eingesetzt wird. Möglich ist auch, daß letzteres Cycloalkan durch 50 % von anderen Bis(amino)cycloalkanen ersetzt sind. Besonders bevorzugt wird jedoch ein transparentes Polyamid verwendet, bei dem die vorstehend beschriebenen cycloaliphatischen Diamine eingesetzt werden, und zwar in Kombination mit aliphatischen Dicarbonsäuren mit 8 bis 12 C-Atomen. Dodecandisäure ist besonders bevorzugt. Die Dodecandisäure kann bis zu 50 % durch aromatische Säuren ersetzt sein. Es hat sich auch als vorteilhaft erwiesen, die Dodecandisäure teilweise oder vollständig durch Sebazinsäure oder Azelainsäure oder eine andere aliphatische Dicarbonsäure von mehr als 12 C-Atomen zu ersetzen.

Besonders durch die vorstehend erwähnten Kombinationen der Ausgangsmaterialien zur Herstellung der transparenten Polyamide können ihre optischen Eigenschaften weiter optimiert werden. Mit Bis(3-methyl-4-aminocyclohexyl)-methan und Dodecandisäure können z.B. optische Linsen hergestellt werden, die eine Dichte ≤ 1,1 g/cm³, einen Brechungskoeffizienten n_{D}²⁰ ≥ 1,50 und eine Abbé-Zahl > 40 aufweisen.

Selbstverständlich ist es auch möglich, wie bereits in der EP 0 725 101 A1 beschrieben, daß transparente Legierungen oder Blends der vorstehend beschriebenen Polyamid-Formmassen eingesetzt werden. Bei den Legierungen ist bevorzugt PA 12 oder PA 11 als Legierungskomponente eingesetzt. Bei Blends sind weitere amorphe Polyamide einsetzbar. Die Polyamid-Formmassen können auch die üblicherweise bekannten Zusatzstoffe enthalten wie Hitzestabilisatoren, UV-Stabilisatoren, Additive, Füllstoffe, Fasern, Pigmente, Schlagzähmodifikatoren aller Art, Weichmacher.

Nachfolgend wird die Erfindung anhand von zwei Ausführungsbeispielen näher beschrieben.

### Beispiel 1

### Herstellung von Linsen durch Spritzguß

Das getrocknete transparente Granulat des Homopolyamides aus Bis(3-methyl-4-aminocyclohexyl)-methan und Dodecandisäure mit einer Lösungsviskosität in 0,5 % m-Kresol von 1,71 und einem Feuchtegehalt von 0,06 % H₂O wurde über einen mit Stickstoff beschleierten Hopper einer Spritzgußmaschine vom Typ Arburg 320-210-75 zugeführt und nach einer Spülzeit von 15 Min. zu Brillenlinsen von 1,5 mm Dicke und 65 mm Durchmesser verspritzt. Die Zylindertemperaturen betrugen 265, 270, 275, 280 °C, die Massetemperatur 275 °C, der Spritzdruck und der Nachdruck 50 bar, die Zykluszeit betrug 19 Sekunden. Das Werkzeug besaß 12 Halbschalenkavitäten sternförmig um einen zentralen Angußtunnel angeordnet; die Werkzeugtemperatur betrug 80 °C. Die erhaltenen Linsen waren völlig transparent und extrem sauber und wurden mittels für optische Belange gängigen Prüfmethoden mit guten Ergebnissen untersucht.

Einzelne Linsen wurden tauchlackiert und getrocknet, andere in einer Vakuumbedampfungsanlage verspiegelt. Beide Beschichtungsarten ergaben eine gleichmäßige und gute Haftung zur Polyamid-Linse. Ebenfalls war der Abriebtest in Ordnung. Muster der Linsen wurden in ein vorbereitetes Brillengestell aus dem gleichen Polyamidmaterial eingesetzt. Die gesamte Brille hatte ein Gewicht von 34 g. Die Linsen besaßen eine Dichte von 1,01 g/cm³, eine Brechzahl von 1,510 und eine Abbé-Zahl von 52.

### Beispiel 2

### Herstellung von Überzugröhrchen für Lichtwellenleiter

Mit dem gleichen Polyamidgranulat wie in Beispiel 1 wurde eine Nokia-Extrusionsmaschine SLC 24 gespeist. Es wurde bei 240 bis 280 °C eine 3 mm Hohlader von 0,5 mm Wandstärke mit einer in Jelly eingebetteten optischen Faser von Dow Corning bei 100 m Abzug extrudiert, mittels zwei Wasserbädern und einem Luftbad gekühlt und aufgerollt. An 100 m des Hohladersystems wurde die Dämpfung im Temperaturbereich -30 °C bis +80 °C gemessen; die Dämpfungszunahme war aufgrund der hohen Dimensionsstabilität der Hohlader äußerst gering.

## Patentansprüche

1. Verwendung von Polyamid-Formmassen, deren Legierungen oder Blends, die mindestens ein Homopolyamid enthalten, das aus aliphatischen Monomerbausteinen mit mindestens 8-C-Atomen mit cycloaliphatischen Monomerbausteinen erhalten worden ist, zur Herstellung von Formkörpern für optische oder elektrooptische Anwendungen.

2. Verwendung nach Anspruch 1,
**dadurch gekennzeichnet, daß** Linsen, Brillengläser oder Lupen hergestellt werden.

3. Verwendung nach Anspruch 1 oder 2,
**dadurch gekennzeichnet, daß** optische Linsen mit einer Dichte ≤ 1,1 g/cm³, einem Brechungskoeffizienten n_{D}²⁰ ≥ 1,50 und eine Abbé-Zahl > 40 hergestellt werden.

4. Verwendung nach Anspruch 1,
**dadurch gekennzeichnet, daß** farblose oder gefärbte optische Halbzeuge oder Linsen oder Brillengläser oder Brillengestelle oder Kombinationen hiervon hergestellt werden.

5. Verwendung nach Anspruch 1,
**dadurch gekennzeichnet, daß** optische Fasern oder Kabelschutzrohre für Lichtwellenleiter hergestellt werden.

6. Verwendung nach mindestens einem der Ansprüche 1 bis 5,
**dadurch gekennzeichnet, daß** ein Homopolyamid verwendet wird, das im wesentlichen aus alkyl-substituierten cycloaliphatischen Diaminen mit 14 bis 22 C-Atomen und unverzweigten aliphatischen Dicarbonsäuren mit 8 bis 14 C-Atomen, welche durch maximal 50 mol-% aromatische Dicarbonsäuren ersetzt sein können, oder aus unverzweigten aliphatischen Diaminen mit 8 bis 14 C-Atomen und cycloaliphatischen Dicarbonsäuren mit 7 bis 36 C-Atomen, welche durch maximal 50 mol-% aromatische Dicarbonsäuren ersetzt sein können, aufgebaut ist.

7. Verwendung nach Anspruch 6,
**dadurch gekennzeichnet, daß** als cycloaliphatische Diamine Bis-(amino)-cycloalkan-Verbindungen verwendet werden.

8. Verwendung nach Anspruch 7,
**dadurch gekennzeichnet, daß** als cycloaliphatisches Diamin Bis(3-methyl-4-aminocyclohexyl)methan, das mit bis zu 50 % durch andere Bis-(amino)cycloalkan-Verbindungen ersetzt sein kann, verwendet wird.

9. Verwendung nach mindestens einem der Ansprüche 1 bis 8,
**dadurch gekennzeichnet, daß** als aliphatische Dicarbonsäuren solche mit 8 bis 12 C-Atomen verwendet werden.

10. Verwendung nach Anspruch 9,
**dadurch gekennzeichnet, daß** als Dicarbonsäure Dodecandisäure, die mit bis zu 50 % durch aromatische Säuren ersetzt sein kann, verwendet wird.

11. Verwendung nach Anspruch 10,
**dadurch gekennzeichnet, daß** die Dodecandisäure teilweise oder vollständig durch Sebazinsäure, Azelainsäure oder eine aliphatische Dicarbonsäure von mehr als 12 C-Atomen ersetzt sein kann.

## Claims

1. Use of polyamide moulding compounds or the compound's alloys or the compound's blends containing at least one homopolyamide which has been obtained from aliphatic monomer blocks having at least 8 C-atoms with cycloaliphatic monomer blocks for manufacturing moulded bodies for optical or electro-optical purposes.

2. Use according to Claim 1, **characterized in that** lenses, spectacle lenses or magnifying glasses are manufactured.

3. Use according to Claim 1 or 2, **characterized in that** optical lenses with a density of ≤1.1 g/cm³, a refractive coefficient n_{D}²⁰ ≥1.50 and an Abbe number of >40 are manufactured.

4. Use according to Claim 1, **characterized in that** colourless or coloured optical semi-products or lenses or spectacle lenses or spectacle frames or combinations thereof are manufactured.

5. Use according to Claim 1, **characterized in that** optical fibres or cable protective tubes for optical waveguides are manufactured.

6. Use according to at least one of Claims 1 to 5, **characterized in that** the homopolyamide used is essentially constructed from alkyl-substituted cycloaliphatic diamines having 14 to 22 C-atoms and unbranched aliphatic dicarboxylic acids having 8 to 14 C-atoms, which may be replaced by a maximum of 50 mol% of aromatic dicarboxylic acids, or from unbranched aliphatic diamines having 8 to 14 C-atoms and cycloaliphatic dicarboxylic acids having 7 to 36 C-atoms, which may be replaced by a maximum of 50 mol% of aromatic dicarboxylic acids.

7. Use according to Claim 6, **characterized in that** the cycloaliphatic diamines are bis-(amino)-cycloalkane compounds.

8. Use according to Claim 7, **characterized in that** the cycloaliphatic diamine is bis-(3-methyl-4-aminocyclohexyl)-methane which can be replaced by up to 50% of other bis-(amino)-cycloalkane compounds.

9. Use according to at least one of Claims 1 to 8, **characterized in that** the aliphatic dicarboxylic acids have 8 to 12 C-atoms.

10. Use according to Claim 9, **characterized in that** the dicarboxylic acid is dodecanedioic acid which can be replaced by up to 50% of aromatic acids.

11. Use according to Claim 10, **characterized in that** the dodecanedioic acid can be partly or entirely replaced by sebacic acid, azelaic acid or an aliphatic dicarboxylic acid with more than 12 C-atoms.

## Revendications

1. Utilisation de masses à mouler en polyamide, dont les alliages ou les mélanges, qui contiennent au moins un homopolyamide, qui a été obtenu à partir de modules monomères aliphatiques comportant au moins 8 atomes de C avec des modules monomères cycloaliphatiques, pour la fabrication de corps moulés pour des utilisations optiques ou électro-optiques.

2. Utilisation selon la revendication 1, **caractérisée en ce qu'**on fabrique des lentilles, des verres de lunettes ou des loupes.

3. Utilisation selon la revendication 1 ou 2, **caractérisée en ce qu'**on fabrique des lentilles optiques ayant une masse volumique inférieure à 0,01 g/cm³, un indice de réfraction m_{D}²⁰ ≥ 1,50 et un nombre d'Abbé > 40.

4. Utilisation selon la revendication 1, **caractérisée en ce qu'**on fabrique des demi-produits optiques ou des lentilles ou des verres de lunettes, incolores ou colorés, ou des montures de lunettes ou des combinaisons de tels articles.

5. Utilisation selon la revendication 1, **caractérisée en ce qu'**on fabrique des fibres optiques ou des tubes de protection pour câbles pour guides d'ondes lumineuses.

6. Utilisation selon au moins l'une des revendications 1 à 5, **caractérisée en ce qu'**on utilise un homopolyamide, qui est constitué essentiellement par des diamines cycloaliphatiques à substitution alkyle comportant 14 à 22 atomes de C et des diacides carboxyliques aliphatiques non ramifiés comportant 8 à 14 atomes de C, qui peuvent être remplacés au maximum par 50 % en moles de diacides carboxyliques aromatiques, ou par des diamines aliphatiques non ramifiées comportant 8 à 14 atomes de C et des diacides carboxyliques cycloaliphatiques comportant 7 à 36 atomes de C, qui peuvent être remplacés au maximum par 50 % en moles de diacides carboxyliques aromatiques.

7. Utilisation selon la revendication 6, **caractérisée en ce qu'**on utilise comme diamines cycloaliphatiques des composés bis-(amino)-cycloalkanes.

8. Utilisation selon la revendication 7, **caractérisée en ce qu'**on utilise comme diamine cycloaliphatique, du bis-(3-méthyl-4-aminocyclohexyl)-méthane, qui peut être remplacé, jusqu'à 50 % par d'autres composés bis-(amino)-cycloalkanes.

9. Utilisation selon l'une des revendications 1 à 8, **caractérisée en ce qu'**on utilise comme diacides carboxyliques aliphatiques, de tels acides comportant 8 à 12 atomes de C.

10. Utilisation selon la revendication 9, **caractérisée en ce qu'**on utilise comme diacide carboylique, du acide diacide dodécanique, qui peut être remplacé jusqu'à 50 % par des acides aromatiques.

11. Utilisation selon la revendication 10, **caractérisé en ce que** le diacide dodécanique peut être remplacé en partie ou en totalité par de l'acide sébacique, de l'acide azélaique ou un diacide carboxylique aliphatique comportant plus de 12 atomes de C.
